# EUROPÄISCHE PATENTSCHRIFT

(11) **EP 2 696 037 B1**
(45) Veröffentlichungstag und Bekanntmachung des Hinweises auf die Patenterteilung: **01.03.2017**
(21) Anmeldenummer: 12179772.4
(22) Anmeldetag: 09.08.2012
(51) Int. Cl.: F01D 11/00, F01D 9/04, F01D 11/08, F01D 11/12, F01D 25/14, F01D 25/24

(54) **Abdichtung des Strömungskanals einer Strömungsmaschine**
Sealing of the flow channel of a fluid flow engine
Joint du canal d'écoulement d'une turbomachine

(43) Veröffentlichungstag der Anmeldung: 12.02.2014
(73) Patentinhaber: MTU Aero Engines AG, 80995 München (DE)
(72) Erfinder: Feldmann, Manfred, 82223 Eichenau (DE); Schinko, Norbert, 81373 München (DE); Kaltenbach, Sebastian, 80636 München (DE); Lorenz, Joachim, 85250 Altomünster (DE)

(56) Entgegenhaltungen:
- EP-A1- 0 356 305
- EP-A1- 0 618 349
- EP-A1- 0 844 369
- EP-A1- 1 106 785
- DE-A1- 10 048 156

## Beschreibung

### HINTERGRUND DER ERFINDUNG

### GEBIET DER ERFINDUNG

Die vorliegende Erfindung betrifft eine Strömungsmaschine, insbesondere eine thermische Strömungsmaschine, wie eine stationäre Gasturbine oder ein Flugtriebwerk, mit einem Strömungskanal und einem Gehäuse, welches den Strömungskanal radial umgibt, und insbesondere die Abdichtung des Strömungskanals gegenüber dem Gehäuse.

### STAND DER TECHNIK

Thermische Strömungsmaschinen, wie Gasturbinen oder Strahltriebwerke, sind seit längerem bekannt. Bei diesen Maschinen wird durch Verbrennung von Treibstoff ein Fluid von Verbrennungsgasen erzeugt, welches Rotoren zur Drehung antreibt, um dadurch Energie oder Vortrieb zu erzeugen. Üblicherweise weisen die Verbrennungsgase im Strömungskanal sehr hohe Temperaturen auf, sodass zwischen dem Strömungskanal und dem Gehäuse der Strömungsmaschine Auskleidungselemente, Hitzeschutzbleche und/oder Kühlkanäle sowie Isolierelemente vorgesehen werden, um einen steilen Temperaturgradienten vom Strömungskanal zum Gehäuse einzustellen.

Darüber hinaus muss die den Strömungskanal radial umgebende Hülle außerdem dafür sorgen, dass möglichst kein Fluid aus dem Strömungskanal entweichen kann, sodass möglichst die gesamten Verbrennungsgase zum Antrieb der Rotoren zur Verfügung stehen. Dies ist aber unter Umständen durch die komplexe Struktur der Umhüllung mit Gehäuse, Hitzeschutzblechen, Auskleidungselementen und Bauteilen für Kühlluftkanäle schwierig zu realisieren, da vielfältige Komponenten miteinander verbunden werden müssen. Dadurch kann es leicht zur Ausbildung von Spalten und Hohlräumen kommen, durch die sowohl Fluid aus dem Strömungskanal entweichen als auch Kühlluft in den Strömungskanal eindringen könnte. Aus diesem Grund ist es wichtig, bei der Konstruktion der Hülle um den Strömungskanal darauf zu achten, dass zwischen den einzelnen Komponenten Dichtflächen ausgebildet sind, welche Leckagen bezüglich des Strömungskanals vermeiden.

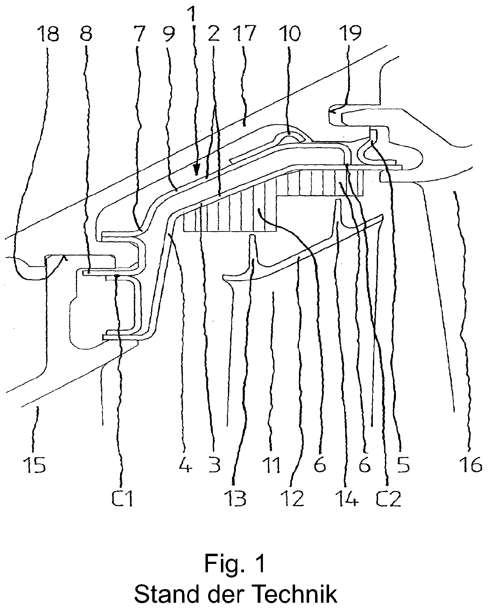

Aus der DE 101 22 464 C1 ist ein Mantelring für eine Strömungsmaschine bekannt, wie er in der Figur 1 dargestellt ist. Die in Figur 1 dargestellte Strömungsmaschine weist einen Laufschaufelkranz 11 mit einem Deckband mit zwei Dichtspitzen 13, 14 auf, welche mit einem Einlaufbelag 6 in Honigwabenstruktur zusammenwirken. Stromaufwärts und stromabwärts des Laufschaufelkranzes 11 sind Leitschaufeln 15, 16 zu erkennen, welche als Einzelteile oder als aus mehreren Schaufeln zusammengefasste Segmente statisch im Gehäuse 17 der Turbine angeordnet sind.

Das radial äußere Ende der Leitschaufel 15 liegt in einer radial nach innen offenen, rund um das Gehäuse 17 verlaufenden Nut 18 des Gehäuses 17. Das radial äußere Ende der Leitschaufel 16 greift in eine axial nach hinten offene, rund um das Gehäuse 17 verlaufende Nut 19 des Gehäuses 17, wobei der die Nut 19 umgebende Bereich auch als Gehäusehaken bezeichnet wird. Eine vergleichbare Aufhängung besitzt auch die Leitschaufel 15 (links außerhalb der Darstellung). Der Mantelring 1 erstreckt sich axial von der Leitschaufel 15 bis zur Leitschaufel 16 sowie in Umfangsrichtung rund um das Gehäuse 17. Der Mantelring ist segmentiert ausgeführt. Heißgasseitig ist ein Dichtungsträger 3 angeordnet, der den Einlaufbelag 6 als Teil der Outer Air Seal (OAS) hält.

Gehäuseseitig ist ein Sicherungselement 7 vorhanden, das in seiner primären Funktion die Leitschaufel 15 gegen Freikommen aus der Nut 18 sichert. Der Dichtungsträger 3 umfasst neben dem Einlaufbelag 6 ein schalenartiges Trägerteil 4 und ein Anschlagteil 5. Mehrere solcher Dichtungsträger 3 sind über den Maschinenumfang aneinander grenzend positioniert sind. Das Sicherungselement 7 umfasst ein im Axialschnitt C-förmiges Sicherungsteil 8, welches die Nut 18 mit dem Leitschaufelende untergreift, ein schalenartiges Abschirmteil 9 und ein im Axialschnitt hakenähnliches Anschlagteil 10. Die weitestgehend voneinander beabstandeten Elemente 3 und 7 weisen definierte Kontaktstellen C1, C2 auf, deren Erstreckung im Hinblick auf geringe Wärmeleitung minimiert ist, z. B. durch periodische Unterbrechungen in Umfangsrichtung, die jedoch für die gegenseitige Abstützung erforderlich sind.

Problematisch bei der gezeigten Anordnung ist, dass die Dichtwirkung des Anschlagteils 5 während des Betriebs nachlässt und sich Spalten zwischen dem Anschlagteil 5 und dem Gehäusehaken 19 bilden können, die zu Verlust von Strömungsfluid führen können.

Aus der EP 0 356 305 A1 ist ein Turbinenstator, bestehend aus einem Statorring, der mit einer Halterung am Turbinengehäuse befestigt ist, bekannt.

Aus der EP 1 106 785 A1 ist eine Turbomaschine, bei der im Bereich einer Rotorstufe zwischen einem Dichtungsträgerring und einem Gehäuseabschnitt Isolierungen vorgesehen sind, bekannt.

Aus der DE 100 48 156 A1 ist eine Turbinendeckbandsegmentbefestigung mit einem Gehäuse und mit mehreren in dem Gehäuse angeordneten Deckbandsegmenten mit Dichtungsbereichen für Laufschaufeln bekannt.

### OFFENBARUNG DER ERFINDUNG

### AUFGABE DER ERFINDUNG

Es ist deshalb Aufgabe der vorliegenden Erfindung eine Strömungsmaschine und insbesondere eine Dichtanordnung hierfür bereitzustellen, die der Problematik des Standes der Technik abhilft und eine möglichst gute Abdichtung des Strömungskanals einer Strömungsmaschine gegenüber einem den Strömungskanal umgebendes Gehäuse ermöglicht.

### TECHNISCHE LÖSUNG

Diese Aufgabe wird gelöst durch eine Strömungsmaschine mit den Merkmalen des Anspruchs 1. Vorteilhafte Ausgestaltungen sind Gegenstand der abhängigen Ansprüche.

Die vorliegende Erfindung geht aus von der Erkenntnis, dass eine Dichtwirkung eines Anschlagselements, wie in der DE 101 22 464 C1 gezeigt, dadurch verloren gehen kann, dass im Betrieb bei hohen Temperaturen aufgrund der thermischen Ausdehnung eine Verschiebung des Anschlagelements stattfindet, so dass die Dichtwirkung sich verschlechtert.

Diesem erkannten Problem wird nunmehr dadurch begegnet, dass ein Dichtelement zur dichtenden Anlage am Gehäuse einer thermischen Strömungsmaschine nicht an einem Abdicht- und Auskleidungselement angeordnet wird, das in direktem Kontakt zum Strömungskanal ist, sondem an einem dahinter angeordneten Hitzeschutzelement. Dadurch kann der Einfluss der thermischen Ausdehnung reduziert werden.

Darüber hinaus kann das Dichtelement radial verspannt angeordnet sein, so dass die Dichtwirkung auch bei thermischer Ausdehnung erhalten werden kann.

Das Dichtelement kann an den Hitzeschutzelement als zusätzlich angeordnetes Element ausgebildet sein oder als eine Verlängerung des Hitzeschutzelements mit entsprechender Formgebung des Hitzeschutzelements.

Das Dichtelement kann als elastischer Körper ausgebildet sein, der mit einer Vorspannung an dem Gehäuse anliegt. Insbesondere kann das Dichtelement in Form eines Federelements ausgebildet sein, so dass die Form des Federelements die federnde Anlage des Dichtelements an das Gehäuse unterstützt.

Das Hitzeschutzelement wird üblicherweise in mehrere Segmente bzw. in Form mehrerer Hitzeschutzelemente radial umlaufend um den Strömungskanal angeordnet. Zur Erzielung einer guten Dichtwirkung kann das Dichtelement ebenfalls vollständig radial umlaufend um den Strömungskanal angeordnet sein und insbesondere die gleiche Umfangslänge wie das Hitzeschutzelement aufweisen.

In gleicher Weise wie mehrere Hitzeschutzelemente können auch mehrere Dichtelemente in Umfangsrichtung umlaufend vorgesehen sein und genauso wie die Hitzeschutzelemente können die Dichtelemente einander überlappend ausgebildet sein, um keine Leckagen an entsprechenden Umfangsstößen zu verursachen. Die Überlappung kann in Form von sogenannten Shiplaps erfolgen.

Die Hitzeschutzelemente mit den Dichtelementen können versetzt zu den Abdicht- und Auskleidungselementen angeordnet sein, die ebenfalls radial umlaufend um den Strömungskanal in Form mehrerer Segmente angeordnet sein können. Damit ist es möglich mit den Hitzeschutzelementen sowohl eine Abdichtung gegenüber dem Gehäuse zu verwirklichen als auch eine Segmentstoßabdichtung der Abdicht- und Auskleidungselemente zu realisieren.

Um bei möglichst wenigen Stößen entlang des Umfangs potentielle Bereiche für Leckagen zu schaffen, soll die Anzahl der Hitzeschutzelemente so gering wie möglich gewählt werden, insbesondere sollen für einen Umfang weniger oder gleich 5, vorzugsweise weniger oder gleich 3 Hitzeschutzelemente vorgesehen werden.

### KURZBESCHREIBUNG DER FIGUREN

Die beigefügten Figuren zeigen in rein schematischer Weise in
- Figur 1: einen teilweisen Querschnitt(Axialschnitt) durch eine Strömungsmaschine nach dem Stand der Technik; und in
- Figur 2: einen teilweisen Querschnitt (Axialschnitt) durch eine Strömungsmaschine gemäß der vorliegenden Erfindung.

### AUSFÜHRUNGSBEISPIEL

Weitere Vorteile, Kennzeichnen und Merkmale der vorliegenden Erfindung werden bei der nachfolgenden detaillierten Beschreibung eines Ausführungsbeispiels anhand der beigefügten Zeichnungen deutlich. Allerdings ist die Erfindung nicht auf dieses Ausführungsbeispiel beschränkt.

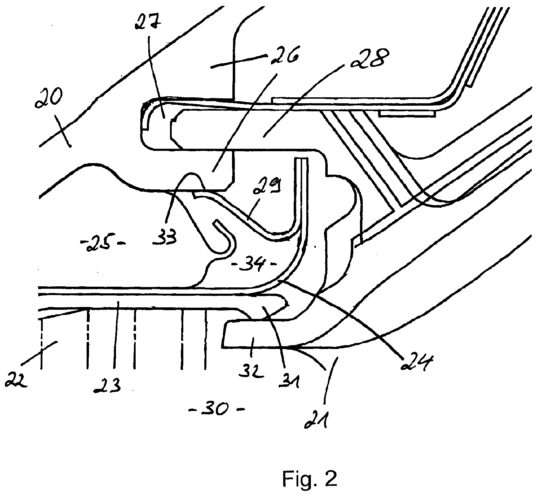

Die Figur 2 zeigt in einer zu der Figur 1 ähnlichen Darstellung einen Axialschnitt durch eine erfindungsgemäße Strömungsmaschine, wobei ein Teil des Gehäuses 20 und ein Teil einer Leitschaufel-Anordnung 21 zu sehen ist, wie sie in einer Niederdruckturbine eines Flugtriebwerks eingesetzt werden können. Die Leitschaufel-Anordnung 20 weist einen Leitschaufelhaken 28 auf, der in eine Nut 27 des Gehäuses 21 eingreift, welche durch einen Gehäusehaken 26 ausgebildet ist.

Das Gehäuse 20 umgibt einen Strömungskanal 30, wobei das Gehäuse 20 den Strömungskanal 30 radial umlaufend in Umfangsrichtung umgibt. Die Leitschaufel-Anordnung 21 erstreckt sich radial in den Strömungskanal 30 hinein, um das in dem Strömungskanal 30 strömende Fluid, wie z.B. Verbrennungsgase, entsprechend zu führen und auf benachbarte Laufschaufeln (nicht dargestellt) zu leiten bzw. das von einen Laufschaufelkranz kommende Fluid auf den nächsten Laufschaufelkranz zu leiten.

Bei der Strömungsmaschine, wie sie in der Figur 2 dargestellt ist, ist ähnlich der Darstellung der Figur 1, ein Laufschaufelkranz (nicht dargestellt) im Bereich der Dichtstruktur 22, die durch einen Einlaufbelag gebildet ist, vorgesehen. Der Einlaufbelag 22 wirkt mit Dichtspitzen der Laufschaufeln zusammen, die sich während des Betriebs in den Einlaufbelag einschleifen können. Der Einlaufbelag 22 ist an einen Abdicht- und Auskleidungselement 23, einem so genannten Liner-Segment angeordnet, welches mit einer Dichtnase 31 an einem Deckband 32 der Leitschaufel-Anordnung 21 anliegt, um den Strömungskanal 30 abzudichten.

In radialer Richtung in Richtung des Gehäuses 20 sind nach dem Abdicht- und Auskleidungselement 23 ein Hitzeschutzelement 24 in Form eines Hitzeschutzbleches sowie eine Isolierung 25 vorgesehen. An dem Hitzeschutzblech ist ein im Querschnitt L-oder leicht S-Förmiges Federelement 29 als Dichtelement angeordnet, welches an dem Gehäusehaken anliegt und mittels elastischer Vorspannung gegen den Gehäusehaken drückt. Dadurch wird zwischen Gehäusehaken 26 und Dichtelement 29 ein Dichtbereich 33 ausgebildet, der eine Abdichtung des Hohlraums 34 zwischen dem Gehäuse 20 und dem Abdicht- und Auskleidungselement 23 bewirkt, welcher auch als OAS cavity (Outer Air Seal Cavitiy) bezeichnet wird. Durch die Anordnung des Dichtelements 29 an dem Hitzeschutzelement 24 ergibt sich für das Dichtelement 29 im Betrieb eine geringere Temperaturbelastung, da keine unmittelbare Wärmeleitung von dem Abdicht- und Auskleidungselement 23 zum Dichtelement 29 erfolgen kann. Dadurch wird erreicht, dass die Gefahr einer plastischen Verformung bzw. einer Kriechverformung des Dichtelements 29 verringert wird. Dies wiederum verbessert die Möglichkeit, die elastischen Eigenschaften des Dichtelements und somit den Anpressdruck des Dichtelements 29 an den Gehäusehaken 26 auch während des Betriebs aufrecht zu erhalten, so dass im Betrieb die Dichtwirkung besser erhalten bleibt.

Darüber hinaus ist das Dichtelement derart angeordnet, dass durch die Druckbelastung die Dichtwirkung unterstützt wird.

Obwohl die vorliegende Erfindung anhand des Ausführungsbeispiels detailliert beschrieben worden ist, ist für den Fachmann selbstverständlich, dass die Erfindung nicht auf dieses Ausführungsbeispiel beschränkt ist, sondern dass vielmehr Änderungen in der Weise möglich sind, dass einzelne Merkmale weggelassen oder andersartige Kombinationen von Merkmalen verwirklicht werden, sofern der Schutzbereich der beigefügten Ansprüche nicht verlassen wird.

## Patentansprüche

1. Strömungsmaschine mit einem Strömungskanal (30) und einem Gehäuse (20), welches den Strömungskanal (30) radial umgibt, wobei in dem Strömungskanal (30) eine Vielzahl von Leit- und Laufschaufeln angeordnet sind, wobei Leitschaufeln (21) in axialer Richtung benachbart zu Laufschaufeln angeordnet sind, und wobei die Leitschaufeln (21) mindestens einen Leitschaufelhaken (28) aufweisen, der in mindestens einen Gehäusehaken (26) eingreift, um die Leitschaufeln (21) mit dem Gehäuse (20) zu verbinden, und wobei in radialer Richtung zwischen den zu den Leitschaufeln (21) benachbarten Laufschaufeln und dem Gehäuse (20) mindestens ein Abdicht- und Auskleidungselement (23) angeordnet ist, welches eine Dichtungsstruktur (22) aufweist, die mit Schaufelspitzen der Laufschaufeln zusammenwirkt, und wobei zusätzlich im Bereich des Abdicht- und Auskleidungselements (23) zwischen Abdicht- und Auskleidungselement (23) und Gehäuse (20) mindestens ein Hitzeschutzelement (24) vorgesehen ist,
**dadurch gekennzeichnet, dass**
an dem Hitzeschutzelement (24) ein Dichtelement (29) zur dichtenden Anlage am Gehäusehaken (26) angeordnet ist.

2. Strömungsmaschine nach Anspruch 1,
**dadurch gekennzeichnet, dass**
das Dichtelement (29) radial verspannt angeordnet ist.

3. Strömungsmaschine nach Anspruch 1 oder 2,
**dadurch gekennzeichnet, dass**
das Dichtelement (29) durch eine Verlängerung des Hitzeschutzelements (24) oder als zusätzlich angeordnetes Element ausgebildet ist.

4. Strömungsmaschine nach einem der vorhergehenden Ansprüche,
**dadurch gekennzeichnet, dass**
das Dichtelement (29) als Federelement ausgebildet ist, das mit einer Vorspannung an dem Gehäusehaken (26) anliegt.

5. Strömungsmaschine nach einem der vorhergehenden Ansprüche,
**dadurch gekennzeichnet, dass**
das Dichtelement (29) sich in Umfangsrichtung radial umlaufend um den Strömungskanal (30) entsprechend der Umfangslänge des Hitzeschutzelements (24), welches die Form eines Hitzeschutzbleches aufweist, über die gesamte Umfangslänge des Hitzeschutzbleches erstreckt.

6. Strömungsmaschine nach einem der vorhergehenden Ansprüche,
**dadurch gekennzeichnet, dass**
mehrere Hitzeschutzelemente (24) mit Dichtelement (29) radial umlaufend entlang des Umfangs des Strömungskanals (30) vorgesehen sind.

7. Strömungsmaschine nach einem der vorhergehenden Ansprüche,
**dadurch gekennzeichnet, dass**
benachbarte Hitzeschutzelemente (24) einander überlappend ausgebildet sind.

8. Strömungsmaschine nach einem der vorhergehenden Ansprüche,
**dadurch gekennzeichnet, dass**
Hitzeschutzelemente (24) und Abdicht- und Auskleidungselemente (23) radial umlaufend entlang des Umfangs des Strömungskanals (30) versetzt zueinander angeordnet sind, so dass die Hitzeschutzelemente (24) die Stöße der Abdicht- und Auskleidungselemente (23) abdecken.

9. Strömungsmaschine nach einem der vorhergehenden Ansprüche,
**dadurch gekennzeichnet, dass**
radial umlaufend entlang des Umfangs des Strömungskanals (30) weniger als 5 Hitzeschutzelemente (24) vorgesehen sind.

## Claims

1. A turbomachine having a flow channel (30) and a housing (20) radially surrounding the flow channel (30), wherein a plurality of guide blades and moving blades are arranged in the flow channel (30), wherein the guide blades (21) are arranged adjacent to the moving blades in the axial direction, and wherein the guide blades (21) have at least one guide blade hook (28) which engages in at least one housing hook (26) in order to connect the guide blades (21) to the housing (20), and wherein at least one sealing and lining element (23) is arranged in the radial direction between the moving blades adjacent to the guide blades (21) and the housing (20), and has a sealing structure (22) which interacts with blade tips of the moving blades, and wherein in addition at least one heat protection element (24) is provided in the region of the sealing and lining element (23) between the sealing and lining element (23) and the housing (20),
**characterized in that**
a sealing element (29) for sealing contact with the housing hook (26) is arranged on the heat protection element (24).

2. The turbomachine according to claim 1,
**characterized in that**
the sealing element (29) is arranged in a radially clamped manner.

3. The turbomachine according to claim 1 or 2,
**characterized in that**
the sealing element (29) is formed by an elongation of the heat protection element (24) or as an additionally arranged element.

4. The turbomachine according to one of the preceding claims,
**characterized in that**
the sealing element (29) is configured as a spring element which abuts the housing hook (26) with a pretension.

5. The turbomachine according to one of the preceding claims,
**characterized in that**
the sealing element (29) extends over the entire circumferential length of the heat protection element (24), which is the form of a heat protection plate, in the circumferential direction and radially around the flow channel (30), and extends over the entire circumferential length of the heat protection plate.

6. The turbomachine according to one of the preceding claims,
**characterized in that**
a plurality of heat protection elements (24) having a sealing element (29) are provided radially along the circumference of the flow channel (30).

7. The turbomachine according to one of the preceding claims,
**characterized in that**
adjacent heat protection elements (24) are designed to overlap one another.

8. The turbomachine according to one of the preceding claims,
**characterized in that**
heat protection elements (24) and sealing and lining elements (23) are arranged offset with respect to one another radially along the circumference of the flow channel (30), so that the heat protection elements (24) cover the joints between the sealing and lining elements (23).

9. The turbomachine according to one of the preceding claims,
**characterized in that**
fewer than 5 heat protection elements (29) are provided radially along the circumference of the flow channel (30).

## Revendications

1. Turbomachine avec un canal d'écoulement (30) et un carter (20), qui entoure radialement le canal d'écoulement (30), dans laquelle une pluralité d'aubes directrices et mobiles sont agencées dans le canal d'écoulement (30), dans laquelle des aubes directrices (21) sont agencées dans la direction axiale de manière adjacente à des aubes mobiles, et dans laquelle les aubes directrices (21) présentent au moins un crochet d'aube directrice (28), qui vient en prise dans au moins un crochet de carter (26) pour relier les aubes directrices (21) au carter (20), et dans laquelle dans la direction axiale entre les aubes mobiles adjacentes aux aubes directrices (21) et le carter (20), au moins un élément d'étanchéité et de revêtement (23) est agencé, qui présente une structure d'étanchéité (22), qui coopère avec des pointes d'aube des aubes mobiles, et dans laquelle au moins un élément de protection thermique (24) est prévu en plus au niveau de l'élément d'étanchéité et de revêtement (23) entre l'élément d'étanchéité et de revêtement (23) et le carter (20),
**caractérisée en ce que**
un élément d'étanchéité (29) est agencé au niveau de l'élément de protection thermique (24) pour s'appliquer de manière étanche sur le crochet de carter (26).

2. Turbomachine selon la revendication 1,
**caractérisée en ce que**
l'élément d'étanchéité (29) est agencé de manière radialement bloquée.

3. Turbomachine selon la revendication 1 ou 2,
**caractérisée en ce que**
l'élément d'étanchéité (29) est réalisé par un prolongement de l'élément de protection thermique (24) ou sous forme d'élément agencé en plus.

4. Turbomachine selon l'une quelconque des revendications précédentes,
**caractérisée en ce que**
l'élément d'étanchéité (29) est réalisé sous forme d'élément ressort, qui s'applique avec une précontrainte sur le crochet de carter (26).

5. Turbomachine selon l'une quelconque des revendications précédentes,
**caractérisée en ce que**
l'élément d'étanchéité (29) s'étend dans la direction périphérique de manière radialement périphérique autour du canal d'écoulement (30) conformément à la longueur périphérique de l'élément de protection thermique (24), qui présente la forme d'une tôle de protection thermique, sur toute la longueur périphérique de la tôle de protection thermique.

6. Turbomachine selon l'une quelconque des revendications précédentes,
**caractérisée en ce que**
plusieurs éléments de protection thermique (24) avec élément d'étanchéité (29) sont prévus de manière radialement périphérique le long de la périphérie du canal d'écoulement (30).

7. Turbomachine selon l'une quelconque des revendications précédentes,
**caractérisée en ce que**
des éléments de protection thermique (24) adjacents sont réalisés de manière à se chevaucher l'un l'autre.

8. Turbomachine selon l'une quelconque des revendications précédentes,
**caractérisée en ce que**
des éléments de protection thermique (24) et des éléments d'étanchéité et de revêtement (23) sont agencés de manière décalée l'un par rapport à l'autre de manière radialement périphérique le long de la périphérie du canal d'écoulement (30) de façon à ce que les éléments de protection thermique (24) couvrent les joints des éléments d'étanchéité et de revêtement (23).

9. Turbomachine selon l'une quelconque des revendications précédentes,
**caractérisée en ce que**
moins de 5 éléments de protection thermique (24) sont prévus de manière radialement périphérique le long de la périphérie du canal d'écoulement (30).
